# EUROPÄISCHE PATENTSCHRIFT

(11) **EP 1 698 224 B1**
(45) Veröffentlichungstag und Bekanntmachung des Hinweises auf die Patenterteilung: **11.03.2009**
(21) Anmeldenummer: 06003882.5
(22) Anmeldetag: 25.02.2006
(51) Int. Cl.: A01G 13/02

(54) **Biologisch abbaubare Folie**
Biodegradable film
Film biodégradable

(30) Priorität: 01.03.2005 DE 102005009346; 10.11.2005 DE 102005053587
(43) Veröffentlichungstag der Anmeldung: 06.09.2006
(73) Patentinhaber: Hössl, Klaus, 39221 Grossmühlingen (DE)
(72) Erfinder: Hössl, Klaus, 39221 Grossmühlingen (DE); Bohlander, Ralf, Dr., 40699 Erkrath (DE)
(74) Vertreter: Leinung, Günter

(56) Entgegenhaltungen:
- DE-A1- 4 432 161
- DE-A1- 10 308 236
- DE-A1- 19 856 507
- NL-C2- 1 002 374
- US-A- 3 320 695
- US-A- 3 387 405

## Beschreibung

Die Erfindung betrifft eine biologisch abbaubare Folie zur temporären Bodenabdeckung für landwirtschaftliche Großflächen, Landwirtschafts-, Gemüse- bzw. Gartenbau sowie zur Landschaftsgestaltung, Dammbau und zu Hangbefestigungen.

Es ist allgemeiner Stand der Technik, dass in der Landwirtschaft Aussaathilfen in Form von Folien verwendet werden.

So sind Mulchfolien bekannt, aber auch Kunststofffolien werden bereits seit längerer Zeit zur Befestigung im Freiland gegen Windverwehung ausgelegt und verwendet, wobei bereits auch Folien bekannt sind, die zum einen zum Schutz der Pflanzen und zum anderen zur Bekämpfung von Unkraut und zur Befestigung der Ackeroberflächen gegen Windverwehungen zum Einsatz kommen.

So ist bekannt, dass biologisch abbaubare Folien für die Landwirtschaft dadurch herstellbar sind, dass Polypeptide mit ethylenisch ungesättigten Gruppen copolymerisiert werden (DE A1 42 08 435 und DE A1 42 10 334); Folien oder Vliese aus pflanzlichen Rohstoffen, wie z. B. Kohlenhydraten oder fermentierten Stärken bzw. Stärkeacetat, bestehen. Hier sei auf die DE 42 28 016 C1 und die DE 198 56 507 A1 verwiesen.

Zu den biologisch abbaubaren Folien gehören auch jene, die aus Polyestercarbonaten bzw. Polyesteramiden bestehen.

Aus der DE 44 32 161 A1 sind verschiedene biologisch abbaubare synthetische Polymere auf Polyester bzw. Polyesteramid-Basis bekannt.
Diese besitzen die Eigenschaft, dass sie gut thermoplastisch verarbeitbar und auf der anderen Seite biologisch abbaubar sind, d. h. deren gesamte Polymerkette von Mikroorganismen (Bakterien und Pilze) mittels Enzymen gespalten und vollständig zu Kohlendioxid, Wasser und Biomasse abgebaut werden. Ein entsprechender Test in natürlicher Umgebung unter Einwirkung von Mikroorganismen, wie es u. a. in einem Kompost vorherrscht, wird u. a. in der DIN V 54 900 gegeben. Diese biologisch abbaubaren Materialien können aufgrund des thermoplastischen Verhaltens zu Halbzeugen wie Gieß- und Blasfilmen verarbeitet werden. Dennoch ist der Einsatz dieser Halbzeuge stark begrenzt, da die mechanischen Eigenschaften für viele Anwendungen unzureichend sind.

Eine biologisch abbaubare Folie der beschriebenen Gattung ist aus der DE 103 08 236 A1 bekannt. Diese Folie ist ein biologisch abbaubarer Folienüberzug, der gleichfalls zur temporären Bodenabdeckung für landwirtschaftliche Nutzflächen genutzt wird, welcher aus Polyhydroxypolyethern nativer Fettsäureglycide besteht.

Dieser Folienüberzug ist ferner dadurch gekennzeichnet, dass er durch Umsetzung von nativen Epoxiden mit sich selbst in Gegenwart von Ameisen-, Phosphor- oder Schwefelsäure bei Temperaturen von 80 bis 120 °C entsteht, wobei bei der Epoxidherstellung Teile des Sauerwassers im Reaktionsgemisch verbleiben und das Gemisch auf o. g. Temperaturen erwärmt wird.

Zum Verfahren zur Ausbringung des vorgestellten biologisch abbaubaren Folienüberzuges wird ausgeführt, dass Polyhydroxypolyether nativer Fettsäureglycide in Lösungen oder Suspensionen durch Versprühen auf den Boden aufgebracht werden.
Als Lösungs- oder Suspensionsmittel werden Aceton bzw. Gemische von Wasser und Aceton verwendet.

Nachteilig bei dieser biologisch abbaubaren Folie ist, dass die Herstellung mit erheblichen finanziellen Aufwendungen verbunden ist, wodurch das Aufwand-Nutzen-Verhältnis für den Betreiber von landwirtschaftlichen Nutzflächen negativ beeinflusst wird.

Unter Beachtung der Nachteile des Standes der Technik ist es Aufgabe der Erfindung, eine effektiv herstellbare biologisch abbaubare Folie für landwirtschaftliche Nutzflächen, für Flächen der Landschaftsgestaltung sowie zu Hangbefestigungen in Form einer spritzfähigen Mulchlösung zu entwickeln, mit denen die Nachteile des Standes der Technik weitestgehend beseitigt werden und welche wachstumsfördernd wirkt.

Erfindungsgemäß wird diese Aufgabe mit den Merkmalen des Anspruches 1 gelöst. Besondere Ausgestaltungen und vorteilhafte Lösungen sind in den Unteransprüchen angegeben.

Die erfindungsgemäße biologisch abbaubare Folie ist eine spritzfähige Mulchlösung, eine Flüssigfolie, in Form einer klaren bis opaque leicht beweglichen Flüssigkeit, welche auf einer anorganischen Wasserglaslösung, vorzugsweise Kaliumwasserglaslösung basiert. Hieraus wird eine Lösung bzw. Suspension bis Dispersion mit organischen Plastifizierungskomponenten hergestellt, wobei die Plastifizierungskomponenten bei festen Zugabestoffen < 20µ Partikelgrößen besitzen. Eine so auf einen beispielsweise sandigen Boden aufgespritzte Flüssigkeit bildet die biologisch abbaubare Folie heraus. So entsteht nach dem Eindringen in die oberste Bodenschicht und Verdunstung im Freiland eine plastifizierte bodenverfestigende Schicht an der Bodenoberfläche, welche windfest und resistent gegen Sonnenlicht ist.

Die Wasserglaslösung ist eine Lösung von Alkalisilikaten in Wasser. Das Molverhältnis von Si02 : AlkO2 beträgt dabei 2 bis 10, vorzugsweise in einem Molverhältnis von 3 bis 6. Dabei liegt es im Rahmen der Erfindung, dass Natrium- und Kaliumwassergläser getrennt oder auch in Mischung zum Einsatz kommen, bevorzugterweise reine Kaliwasserglaslösungen.
Dabei kann das Erscheinungsbild der Wasserglaslösungen zur Erzielung einer bestimmten angestrebten Folienstandzeit durch Alkalizugabe verkürzt und durch Kieselsol- oder Zugabe amorpher Kieselsäure verlängert werden.

Die zum Einsatz kommende Trockensubstanz wird in einem Anteil von 5 bis 60 Gew% verwendet, wobei Gew%-Anteile in den Bereichen 25 bis 40 % bevorzugte Bereiche sind, um eine handhabbare Lösung zu erhalten.
Von Vorteil ist, dass durch die Wahl von Mischungsverhältnissen ein hochkonzentriertes Basisprodukt hergestellt werden kann, was zu Einsparungen von Transportkosten führt. Ferner ist von Vorteil, dass eine erfindungsgemäße Mischung unmittelbar vor Ort bedarfsspezifisch mit Wasser verdünnt werden kann, um zum einen das entsprechende Mischungsverhältnis der Flüssigfolie zu erreichen, damit diese biologisch abbaubar ist und zum anderen die Ausbringung auf die Bodenoberfläche über Verdüsung vereinfacht wird, somit eine spritzfähige Lösung vorliegt.

Die nach der Erfindung zum Einsatz kommenden Zusätze sind Polyole, vorzugsweise natürlichen/nachwachsenden Ursprungs. Diese können in Form von Pulver direkt oder zur besseren Verträglichkeit mit der Wasserglaslösung in Wasser vorgelöst und danach eingesetzt werden.

Dabei ist von Vorteil, dass industriell ohnehin prozesstechnisch vorhandene Lösungen, beispielsweise Zuckerlösungen, insbesondere glycerinhaltige Lösungen, bevorzugt verwendet werden. Ausgangsbasen dieser Zumischprodukte sind Spaltprodukte tierischer oder pflanzlicher Öle, Stärken, Zellulosen und Zucker. Auch deren anfallenden Extrakte, Abfallstoffe aus dem thermisch-hydrolytisch-enzymatischen Aufschluss/Abbau von Ölen und Polysachariden/Stärken.
Eine ausreichende Wasserlöslichkeit und Verträglichkeit der Polyole mit Wasserglas wird auch erreicht durch Anoxidation, Veretherung, Acetylierung oder Phosphatierung von Stärkederivaten wie Dexin (Basis Mais, Reis, Kartoffel, Weizen, Roggen) zu Carboximethylcellulose Hydroxiethylcellulose und ähnlichen Produkten.

Diese Gemische werden unter Anwendung von Druckluft über geeignete vorhandene Verdüsungsvorrichtungen auf die zu behandelnden Bodennutzungsflächen aufgebracht und infolge der natürlichen Einwirkungen bildet sich eine ultradünne Schicht in Form einer Folie aus, welche infolge ihrer Bestandteile biologisch abbaubar ist. Hilfsmittel zur Ausbringung mit Druckluft sind biologisch abbaubare Tenside. Dabei richtet sich die Abbauzeit nach den Witterungsbedingungen, aber insbesondere nach der Grundmischung, insbesondere der wasserglashärtenden Anteile in der Grundmischung der aufgebrachten Flüssigfolie.

In einer bevorzugten Ausführungsvariante zur Herausbildung einer biologisch abbaubaren Folie wird diese aus einer spritzfähigen Mulchlösung herausgebildet, welche aus Wasserglas und einem zugemischten Rohglycerin besteht, welches bei der Herstellung von Biodiesel anfällt. Dieses Rohglycerin ist ein Abprodukt aus einer Niedrigdruckumesterungsanlage, mittels der Biodiesel hergesellt wird. Diese Rohglycerine enthalten bereits ca. zwei Gew% KOH und werden unter bestimmter Verfahrensführung so behandelt, dass diese mit Wasser vermischt werden können und im Ergebnis eine leicht handhabbare 80%ige Oligomerglycerin-Lösung vorliegt.

Es liegt im Rahmen der Erfindung, dass die erfindungsgemäßen Oligomere alternativ auch aus synthetischem Aufbau durch beispielsweise Veretherung monumerer Zucker zu Homopolymerisaten hergestellt werden können. Basis sind dabei Glycerine, Diglycerine, Polygoglycerine, vorzugsweise linearer Ketten wegen der besseren biologischen Abbaubarkeit.
Verwendet werden können auch Pentaerytrol, Sorbitol, Glucose, Fructose, Xylose, Lactose, Sucrose. Heteropolymerisate können z. B. Alkylpolyglucoside oder Sorbitanester sein. Dabei werden niedermolekulare Oligomere mit Polymerisationsgraden von 2 bis 20, vorzugsweise von 4 bis 10 verwendet, da diese besser im System löslich sind als höhermolekulare Oligomere und lagerstabilere Mischungen ergeben.

Dabei ist von Vorteil, dass die erfindungsgemäßen Grundmischungen unmittelbar vor ihrer Verwendung vom Anwender selbst leicht um weitere landwirtschaftstypischen Komponenten, wie beispielsweise K-N-P oder Spurenbestandteile enthaltene Düngekomponenten, erweitert werden.
Dies bedingt gleichfalls den Vorteil, dass dieser Lösung, dem Ausgangsprodukt für die sich entwickelnde biologisch abbaubare Folie, die entsprechende Feinsaat dispergiert zugegeben werden kann, somit in einem Arbeitsgang die Aussaat und das Aufbringen der Lösung zur Herausbildung der temporären Bodenabdeckung realisiert wird. Zur Verbesserung des Sprühbildes ist es vorteilhaft, eine Anpassung der Oberflächenspannung der Ausbringungsmischung mit biologisch leicht abbaubaren Tensiden wie linearen Alkylsulfaten oder Alkylpoliglykosiden vorzunehmen.

Allgemein bekannt ist, dass die Abbauzeit von auf landwirtschaftlichen Nutzflächen aufgebrachten Folien von den Witterungsbedingungen bestimmt wird, wobei dieser Prozess gemäß der Erfindung wählbar bzw. einstellbar ist, dies in Abhängigkeit der ausgebildeten Grundmischung der spritzfähigen Mulchlösung, die ausgetragen wird. So ist es möglich, dass nach Ausbringung der spritzfähigen Mulchlösung diese mit allen Komponenten nach 5 bis 200 Tagen, vorzugsweise nach 10 bis 100 Tagen, vollständig im Boden assimiliert und kompostiert ist. Es verbleiben keine schädlichen Reste im Boden und der Boden lässt sich in der folgenden Bearbeitungs-Bepflanzungsperiode wie sonst üblich behandeln.

Ebenfalls kann die spritzfähige Mulchlösung speziell auch auf ortsspezifische Anforderungen hinsichtlich Bodenart, pH-Wert des Bodens, der durchschnittlichen Niederschlagsmenge und in Abhängigkeit der Pflanzentypen eingestellt werden.

Durch das Aufbringen der erfindungsgemäßen flüssigen Mulchlösung erhält man eine Wärmefolie, welche sich insbesondere für den Gemüseanbau eignet. Besondere Bedeutung besitzt diese biologisch abbaubare Folie zur Fixierung von Bodenpartikeln hochsandiger Böden. Diese Böden sind zwar für den Gemüseanbau typisch und vorteilhaft, besitzen jedoch den Nachteil, bei windigem Wetter verweht zu werden, bzw. bei zu trockenem Wetter in der Auflaufphase der Saat zu schnell auszutrocknen. Beide negativen Prozesse werden durch das Aufbringen der erfindungsgemäßen Mulchlösung temporär unterbunden. Die Saat kann aber trotzdem durch die temporär versiegelte Bodenfläche auflaufen.

Unter Beachtung der Flexibilität, des Arbeitsaufwandes, des Mulchergebnisses, der Entsorgung und der Umweltschonung stellt die geschaffene spritzfähige biologisch abbaubare Folie eine Lösung dar, deren Vorteile im ökonomischen und im ökologischen Bereich liegen.
Eine derart hergestellte Folie ist in vielen Bereichen anwendbar. So in der Landwirtschaft, im Gemüseanbau, bei der Gestaltung von Nutzflächen, der Landschaftsgestaltung, so auch im Dammbau und zur Hangbefestigung.

Nachfolgend wird die Erfindung anhand einiger Ausführungsbeispiele näher erläutert, wobei die Ausführungsbeispiele sich beziehen auf die Herstellung der Basiskomponenten für die erfindungsgemäßen Mulchmischungen, bestehend aus Wasserglas und den zugemischten biologisch abbaubaren Oligopolyolen natürlichen und nachwachsenden Ursprungs.

Die Grundkomponente für eine spritzfähige Mulchlösung, aus der sich nach Verspritzung auf wirtschaftliche Nutzflächen in den gesamten Anwendungsbereichen eine biologisch abbaubare Folie herausbildet, ist Wasserglas.

So kommt ein Kaliwasserglas zum Einsatz, bei dem zur Herstellung des Kaliwasserglases Pottasche und Quarzsand in einem passenden Verhältnis bei ca. 1.200 °C zu Kaliumsilikat im Gewichtsverhältnis SiO2 : K2O von 2,65 geschmolzen werden. Dieses Stückenglas wird in heißem Wasser gelöst zu einer Kaliumsilikatlösung MV 3,9 mit einem Feststoffgehalt von ca. 29 %.

Eine zweite Komponente eines Kaliwasserglases besteht aus Quarzsand, welcher mit einer 50%igen Kalilauge in einem Autoklaven bei 150 °C zu einer Kaliumsilikatlösung GV 1,4 mit ca. 50 % Feststoffverlöst wird. Zwei Gewichtsteile dieser Lösung werden gemischt mit 8 Gewichtsteilen der Kaliumsilikatlösung GV 2,65 zu einer Kaliumsilikatlösung GV 2,2 mit einem ca. 34%igen Feststoffgehalt.
Durch Verlösen von MV 4 Natronstückenglas in Wasser bei bis zu 160 °C ergibt sich ein Natronwasserglas in Form einer 28%igen Natriumsilikatlösung. Ein Wasserglas aus sprühgetrocknetem Kaliumsilikatpulver, Portil K, kann gleichfalls verwendet werden.

Schließlich sei noch erwähnt, dass eine 4%ige wässrige Lösung von Polyvinylalkohol MG ca. 100, bekannt unter der Bezeichnung Mowiol 6-98 der Fa. Kuraray, und eine ca. 80%ige wässrige Lösung von Triglycrin der Fa. Fluka verwendet werden kann.

Unter Verwendung der oben aufgeführten Wassergläser und dem Zusatz von biologisch abbaubaren Oligopolyolen ergeben sich folgende spritzfähige Mulchlösungsprodukte:
1. 100 Teile fein gemahlener Zellulose, Arbocel BVB40, werden mit 40 Teilen einer 50%igen Kalilauge gemischt und unter Stickstoffstrom wird das Wasser abdestilliert. Danach wird die Zellulose in einer leicht exothermen Reaktion bei bis zu 200 °C zu oligomeren Polyolen aufgeschlossen. Diese dunkelbraune Masse wird beim Abkühlen in ca. 90 °C vorgeheiztes Natronwasserglas eingegossen. Die schlecht löslichen Anteile werden bei 50 °C über ein Sieb ausgetragen und im Ergebnis liegt eine Lösung mit 4 Gew% oligomerem Zucker und 20 Gew% Natrium-/Kaliumsilikat MV 3,7 vor.
2. Unter Verwendung von 40 Teilen Kaliumsilikatpulver werden in auf 60 °C vorgewärmte 60 Teile eines sprühgetrockneten Kaliumsilikatpulvers, Portil K, eingerührt und man erhält im Ergebnis eine Lösung mit ca. 32 Gew% Kaliumsilikat MV 3 und 3 Gew% Polyalkohol.
3. Eine weitere Mulchlösung wird herausgebildet durch die Verwendung, den Einsatz von 75 Teilen Kaliwasserglas, welche mit 20 Teilen Wasser und 5 Teilen Di-Tri-Glycerin intensiv verrührt werden, dies mit dem Ergebnis, dass eine Lösung mit 22 Gew% Kaliumsilikat MV 3,9 und 4 Gew% Oligoglycerin zur Verfügung steht.

Aus diesen flüssigen spritzfähigen Mulchlösungen bilden sich nach ihrer Verspritzung auf wirtschaftlichen Nutz- bzw. Schutzflächen biologisch abbaubare Flüssigfolien heraus. Diese plastifizierte bodenverfestigte Schicht ist windfest, resistent gegen Sonnenlicht und wird insbesondere angewendet zum Saatschutz gegen Winderosion, zum Schutz vor Schädlingen und Vogelfraß. Ferner dienen diese Folien zur Verfestigung von humusarmen und sandigen Böden und stellen einen Sauberkeitsschutz bei kurzlebigen Kulturen, wie beispielsweise bei Salaten, dar.

Diese Folien zeichnen sich durch besondere vorteilhafte Eigenschaften aus, da sie physiotoxisch unbedenklich sind, zur Verbesserung des Wärmehaushaltes beitragen, dies mit dem Ergebnis einer Ertragssteigerung und ferner garantieren sie ein problemloses Durchdringen/Durchwachsen der Keimlinge.
So ist vorteilhaft, dass weitere Komponenten, nämlich Abfall-Glycerin aus Fettspaltungsanlagen oder Biodieselanlagen und in diesen enthaltende prozesstechnische "Verunreinigungen", wie beispielsweise Phospate, Kali, Mono- oder Diglycerine bzw. färbende Bestandteile auf den Wachstumsprozess nicht störend wirken.

Derart herausgebildete biologisch abbaubare Folien haben eine Standzeit von 5 bis 100 Tagen, gerechnet nach ihrer Ausbringung. Durch die vollständige Zersetzung dieser Folie entstehen keine Kosten für die Bergung, den Transport und für die Entsorgung.

Die Ausbringung dieser spritzfähigen Mulchlösung erfolgt über bekannte Spritztechnik, und da diese Mulchlösungen wasserlöslich sind, können die Spritzgeräte problemlos gereinigt werden, ohne dass Rückstände verbleiben.

Ein weiteres Produkt wird hergestellt unter Verwendung von 69 Teilen eines Kaliwasserglases, 5 Teilen Wasser, 5 Teilen eines statistischen Diglycerins, einem Teil Plantapon LGC und 20 Teilen Abfallglycerin aus Biodiesel.

Ein weiteres Produkt wird hergestellt unter Verwendung von 75 Teilen eines Kaliwasserglases, dem 20 Teile Wasser und 5 Teile eines aus der Biodieselherstellung gewonnenen Rohglycerins zugegeben werden. Nach intensiver Verrührung steht eine Lösung mit 23 Gew% Kaliumsilikat MV 3,8 und 4 Gew% Oligoglycerin zur entsprechenden Anwendung zur Verfügung.

Die Verwendung von 75 Teilen Kaliwasserglas und 25 Teilen von gewonnenem Rohglycerin aus der Biodieselherstellung ergibt nach intensiver Verrührung dieser beiden Teile eine Lösung mit 23 Gew% Kaliumsilikat MV 3,8 und 20 Gew% Oligoglycerinen. Derart hergestellte spritzfähige Mulchlösungen stellen flüssige Kompositionen in Form von chemisch festen Verbindungen aus Kaliumsilikat und Polyolen dar, welche sich nach ihrer Ausbringung mittels bekannter Spritztechnik auf den landwirtschaftlichen Nutzflächen verfestigen. Es entsteht gleichfalls eine plastifizierte, bodenverfestigende Schicht, welche windfest und resistent gegen Sonnenlicht ist.

Diese Mulchlösungen werden insbesondere verwendet zur Dammverfestigung, der Verfestigung der Böden als Mulchierung zum Schutz der Keimlinge, als auch als Sauberkeitsschutz für humusarme und sandige Böden im Gemüsebau, ferner zur Immobilisierung von ausgespritzten Düngern (Stickstoff) und Herbiziden.

Derart ausgebildete abbaubare Folien zeichnen sich dadurch aus, dass sie physiotoxisch unbedenklich und wasserdurchlässig sind, tragen zur Verbesserung des Wärmehaushaltes bei, dies wieder mit dem positiven Ergebnis einer Ertragssteigerung. Ferner gewährleisten derart ausgebildete Folien, dass die Keimlinge diese Folien problemlos durchdringen können, dennoch wirken diese Folien verdunstungshemmend.

Die oben beschriebenen Folien haben Standzeiten von 30 bis 70 Tagen, gerechnet nach ihrer Ausbringung und infolge der vollständigen Zersetzung der Folienschicht entfallen Kosten für Bergung, Transport und Entsorgung.
Diese Mulchlösungen können ebenfalls mit herkömmlicher Spritztechnik ausgetragen und auf landwirtschaftlichen Nutzflächen aufgebracht werden und infolge ihrer vollständigen Wasserlöslichkeit lassen sich die Ausbringungsgeräte/Spritzgeräte problemlos reinigen, so dass keine Rückstände in den Geräten verbleiben.

## Patentansprüche

1. Biologisch abbaubare Folie zur temporären Bodenabdeckung, zum Schutz und zur Wachstumsförderung des eingebrachten Saatgutes, ausbildbar aus einer auf eine landwirtschaftliche Nutzfläche aufgebrachten flüssigen Suspension, **gekennzeichnet durch**
eine spritzfähige Mulchlösung, vorrangig bestehend aus Wasserglas, speziell einer Kaliumsilikatlösung und biologisch abbaubaren Oligopolyolen, natürlichen, nachwachsenden Ursprungs sowie weiteren verfahrenstechnischen Hilfsmitteln in Form von Tensiden als Sprühhilfe und wasserglashärtenden organischen oder anorganischen Substanzen.

2. Biologisch abbaubare Folie nach Anspruch 1, **dadurch gekennzeichnet, dass**
die Wasserglaslösung eine Lösung von Alkalisilikaten in Wasser ist, bei einem Molverhältnis von SiO2 : AlkO2 von 2 bis 10, vorzugsweise 3 bis 6, der die Oligopolyolen als Trockensubstanzen bei Gewichtsprozentanteilen von 5 bis 60 %, vorzugsweise 25 bis 40 % zugemischt sind.

3. Biologisch abbaubare Folie nach den Ansprüchen 1 und 2, **dadurch gekennzeichnet, dass**
Wasserglas in Form von Natrium- oder Kaliumwassergläsern oder Mischungen aus Natrium und Kalium zum Einsatz kommen.

4. Biologisch abbaubare Folie nach einem der Ansprüche 1 bis 3, **dadurch gekennzeichnet, dass**
die Ausgangsbasis der Polyole tierische oder pflanzliche Öle, Stärken, Zellulosen, Zucker und auch deren Extrakte sind.

5. Biologisch abbaubare Folie nach einem der Ansprüche 1 bis 4, **dadurch gekennzeichnet, dass**
dem Wasserglas ein aus der Biodieselherstellung gewonnenes Rohglycerin beigemischt wird.

6. Biologisch abbaubare Folie nach den Ansprüchen 1 bis 5, **dadurch gekennzeichnet, dass**
die Oligopolyole aus synthetischem Aufbau durch Veretherung monumerer Zucker zu Homopolymerisaten hergestellt sind, deren Basis Glycerin, Diglycerin, Olygoglycerin, vorzugsweise linearer Ketten sind.

7. Biologisch abbaubare Folie nach den Ansprüchen 1 und 6, **dadurch gekennzeichnet, dass**
niedermolekulare Olygomere mit Polymerisationsgrad 2 bis 20, vorzugsweise 4 bis 10, zum Einsatz kommen.

8. Biologisch abbaubare Folie nach den Ansprüchen 1 bis 7, **dadurch gekennzeichnet, dass**
der Mulchlösung landwirtschaftstypische Komponenten wie K-N-P und/oder Spurenbestandteile enthaltende Düngekomponenten beigemischt sind.

9. Biologisch abbaubare Folie nach den Ansprüchen 1 bis 8, **dadurch gekennzeichnet, dass**
der Mulchlösung wasserglashärtende Substanzen, wie z. B. langsam hydrolisierbar organische oder anorganische Ester, schwach saure Komponenten z. B. Kieselsäure beigemischt sind.

10. Biologisch abbaubare Folie nach den Ansprüchen 1 bis 9, **dadurch gekennzeichnet, dass**
der Mulchlösung biologische abbaubare, oberflächenaktive Substanzen zur Regulierung der Oberflächenspannung beigemischt werden.

## Claims

1. Biodegradable film for temporary ground cover, for protection and for promotion of growth of the introduced seed which can be formed from a fluid suspension applied to agriculturally productive land, **characterised by**
a sprayable mulch solution, primarily consisting of water glass, especially a calcium silicate solution and biodegradable oligopolyols, of natural, renewable origin and further process technological aids in the form of tensides as spray aids and water glass-hardening organic or inorganic substances.

2. Biodegradable film in accordance with Claim 1, **characterised in that**
the water glass solution is a solution of alkali silicates in water with a molar ratio of SiO₂ : AlkO₂ of 2 to 10, preferably 3 to 6, to which the oligopolyols are added as dry matter at a percentage proportion by weight of 5 to 60 %, preferably 25 to 40%.

3. Biodegradable film in accordance with Claims 1 and 2, **characterised in that**
water glass in the form of sodium or potassium water glass or mixtures of sodium and potassium are used.

4. Biodegradable film in accordance with one of the Claims 1 to 3, **characterised in that**
the starting material of the polyols is animal or plant oils, starches, celluloses, sugars and also extracts thereof.

5. Biodegradable film in accordance with one of the Claims 1 to 4, **characterised in that**
a raw glycerine obtained from the manufacture of biodiesel is added to the water glass.

6. Biodegradable film in accordance with Claims 1 to 5, **characterised in that**
the oligopolyols of synthetic composition are manufactured by the etherification of monomeric sugars to homopolymerisates, the basis of which are glycerine, diglycerine, olygoglycerine, preferably linear chains.

7. Biodegradable film in accordance with Claims 1 and 6, **characterised in that**
low molecular olygomers with a degree of polymerisation of 2 to 20, preferably 4 to 10 are used.

8. Biodegradable film in accordance with Claims 1 to 7, **characterised in that**
typical agricultural components such as K-N-P and/or manure components containing trace constituents are added to the mulch solution.

9. Biodegradable film in accordance with Claims 1 to 8, **characterised in that**
water glass-hardening substances such as e.g. slow hydrolysing organic or inorganic esters, weakly acidic components e.g. silicic acid are added to the mulch solution.

10. Biodegradable film in accordance with Claims 1 to 9, **characterised in that**
biodegradable, surface-active substances for regulating the surface tension are added to the mulch solution.

## Revendications

1. Pellicule biodégradable conçue pour recouvrir temporairement le sol, protéger et favoriser la croissance des semences introduites, composée d'une suspension liquide appliquée sur une surface cultivable, **caractérisée par**
une solution pulvérisable à base de paillis, principalement composée de verre soluble, notamment d'une solution de silicate de potassium et d'oligopolyoles biodégradables d'origine végétale naturelle, ainsi que d'autres adjuvants propres au génie chimique sous forme de tensio-actifs destinés à faciliter la pulvérisation et de substances organiques ou minérales durcissant le verre soluble.

2. Pellicule biodégradable conformément à la revendication n°1, **caractérisée par le fait**
**que** la solution à base de verre soluble est une solution d'alcali-silicates dans l'eau avec un rapport de moles de SiO2 : AlkO2 compris entre 2 et 10, de préférence entre 3 et 6, à laquelle sont mélangés les oligopolyoles en tant que substances sèches pour des pourcentages en poids compris entre 5 et 60%, de préférence entre 25 et 40%.

3. Pellicule biodégradable conformément aux revendications n°1 et n°2, **caractérisée par le fait**
**qu'**un verre soluble de sodium ou de potassium ou des mélanges de sodium et de potassium sont employés.

4. Pellicule biodégradable conformément à l'une des revendications n°1 à n°3, **caractérisée par le fait**
**que** des huiles animales ou végétales, des amidons, des celluloses, des sucres et leurs extraits constituent la base de départ des polyoles.

5. Pellicule biodégradable conformément à l'une des revendications n°1 à n°4, **caractérisée par le fait**
**qu'**une glycérine brute obtenue à partir de la production de biodiesel est ajoutée au verre soluble.

6. Pellicule biodégradable conformément à l'une des revendications n°1 à n°5, **caractérisée par le fait**
**que** les oligopolyoles sont produits à partir d'une texture synthétique au moyen d'une éthérification de sucres monomères pour donner des homopolymérisats, dont la base est la glycérine, la diglycérine, l'olygoglycérine, de préférence de chaînes linéaires.

7. Pellicule biodégradable conformément à l'une des revendications n°1 et n°6, **caractérisée par le fait**
**que** des oligomères de faible poids moléculaire sont utilisés avec un degré de polymérisation compris entre 2 et 20, de préférence entre 4 et 10.

8. Pellicule biodégradable conformément à l'une des revendications n°1 à n°7, **caractérisée par le fait**
**que** des composants habituellement utilisés dans l'agriculture, tels que les composants d'engrais contenant des éléments K-N-P et/ou des éléments de trace sont ajoutés à la solution à base de paillis.

9. Pellicule biodégradable conformément à l'une des revendications n°1 à n°8, **caractérisée par le fait**
**que** des substances durcissant le verre soluble, telles que les esters organiques et minéraux à hydrolysation lente, des composants à faible acidité, tels que l'acide silicique sont ajoutés à la solution à base de paillis.

10. Pellicule biodégradable conformément à l'une des revendications n°1 à n°9, **caractérisée par le fait**
**que** des substances biodégradables et tensioactives sont ajoutées à la solution à base de paillis afin de réguler la tension superficielle.
